**Europäisches Patentamt**

**European Patent Office**

**Office européen des brevets**

(11) Numéro de publication : **0 463 940 B1**

(12) **FASCICULE DE BREVET EUROPEEN**

(45) Date de publication du fascicule du brevet :
**01.02.95 Bulletin 95/05**

(51) Int. Cl.$^6$ : **G01N 21/89**

(21) Numéro de dépôt : **91401663.9**

(22) Date de dépôt : **20.06.91**

(54) **Procédé et dispositif de mesure de la qualité optique d'un vitrage.**

(30) Priorité : **25.06.90 FR 9007924**

(43) Date de publication de la demande :
**02.01.92 Bulletin 92/01**

(45) Mention de la délivrance du brevet :
**01.02.95 Bulletin 95/05**

(84) Etats contractants désignés :
**BE DE ES FR GB IT LU SE**

(56) Documents cités :
**EP-A- 0 342 127**

(73) Titulaire : **SAINT-GOBAIN VITRAGE
INTERNATIONAL**
**"Les Miroirs"**
**18, avenue d'Alsace**
**F-92400 Courbevoie (FR)**

(72) Inventeur : **Guering, Paul**
**91, Avenue d'Italie**
**F-75013 Paris (FR)**
Inventeur : **Gayout, Patrick**
**30, rue Jean Bouin**
**F-93220 Cagny (FR)**
Inventeur : **Vizet, Philippe**
**Imsteinfeld 39**
**W-5100 Aachen (DE)**

(74) Mandataire : **Muller, René et al**
**SAINT-GOBAIN RECHERCHE**
**39, quai Lucien Lefranc-BP 135**
**F-93303 Aubervilliers Cédex (FR)**

## Description

L'invention concerne les techniques de mesure des défauts optiques des vitrages et particulièrement des vitrages automobiles.

D'une manière générale, l'industrie cherche de plus en plus à maîtriser la qualité des produits qu'elle fabrique. Cela est vrai en particulier de la qualité optique des vitrages. Pour atteindre ce but, on maintient dans des fourchettes très étroites tous les paramètres de la production. Mais, néanmoins, un incident est toujours possible et, même s'il est détecté, son effet sur la qualité n'est pas toujours connu de telle sorte qu'un contrôle de la qualité sur 100 % de la production reste indispensable dans de nombreux cas. En ce qui concerne les vitrages, on a souvent besoin d'en évaluer la qualité optique en permanence. On peut, en particulier, souhaiter sélectionner le vitrage sortant des lignes de production pour le destiner à un usage particulier comme par exemple, un miroir destiné à des applications scientifiques ou un verre plat mince destiné à être transformé en un pare-brise très incliné. D'une manière générale, d'ailleurs les pare-brise des automobiles modernes sont particulièrement suivis sur le plan de leur qualité optique. Ce critère touche en effet le problème de la sécurité de la conduite des automobiles et, par ailleurs, les formes des pare-brise, leur inclinaison, les matières dont ils sont fabriqués - verres très minces ou même polymères transparents - nécessitent un contrôle très soigné de la qualité optique, contrôle qu'il faut souvent exercer à 100 %.

Les méthodes de contrôle existantes utilisent pour la plupart, des techniques de projection, soit avec un faisceau localisé comme par exemple celui d'un laser, soit en projetant une mire au travers d'une zone plus ou moins importante du pare-brise. La technique du faisceau localisé comme celle des brevets US 4 398 822 ou US 4 453 827 qui concernent des pare-brise d'avion permet une mesure précise, en particulier de la déviation angulaire subie par les rayons lumineux à la traversée de l'endroit concerné par le faisceau étroit, mais elle nécessite des temps de mesure très longs si l'on souhaite avoir une évaluation globale des pare-brise. Et c'est justement le cas lorsqu'on veut être certain qu'une valeur limite de défaut n'est atteinte par aucun des pare-brise automobiles acceptés au contrôle de sortie d'une ligne de production.

Les autres méthodes connues sont des méthodes globales. Celle du brevet américain US 4 299 482 qui effectue une transformation de Fourier de l'image d'un écran strié telle qu'elle est vue au travers du pare-brise nécessite de réaliser un cliché photographique et elle est, de ce fait, inadaptée à un contrôle continu en production. La méthode décrite dans la demande de brevet allemande DE 36 00 199 utilise, elle, le moiré existant entre un écran strié et la projection au travers du pare-brise d'une mire identique qu'on fait tourner légèrement par rapport à l'écran de manière à obtenir, en l'absence de défauts, des franges de moiré rectilignes. La déformation des franges est observée à l'oeil et la mesure de la déformation la plus importante renseigne sur le défaut optique le plus grand du champ concerné. Mais il s'agit là d'une méthode visuelle qu'il serait très difficile d'automatiser.

Le brevet FR 2 556 097, en revanche propose d'automatiser une méthode visuelle traditionnelle. On observe au travers du pare-brise, à l'aide d'une caméra spéciale, des rayures rectilignes régulières portées par un écran. Le balayage qui est effectué avec une vitesse déterminée permet de "mesurer" la largeur des raies sombres ou claires dans la direction du balayage et d'en déduire une information sur le défaut correspondant. Cette technique qui se fonde sur une méthode normalisée bien connue ne peut fournir de résultats meilleurs qu'elle. Mais l'automatisation elle-même a ses limites qui restreignent encore davantage les possibilités de la méthode visuelle. Dans la méthode normalisée, une observation globale à l'oeil permet de localiser rapidement la zone du défaut le plus important, une mesure sera faite ensuite à l'endroit exact où la largeur des raies zébrées est à son optimum. La mesure automatique en revanche effectue un balayage avec un pas défini (il est de 10 mm dans le plan du pare-brise dans le brevet FR 2 556 097) et l'effet optique n'est mesuré qu'à ces endroits précis : le risque est grand de ne pas détecter le défaut maximum. Par ailleurs, les limites d'une méthode qui détermine l'épaisseur de raies zébrées dans une seule direction sont bien connues : si le défaut le plus important n'a pas son effet dominant perpendiculairement aux raies, sa valeur sera minorée.

L'invention se propose de fournir une méthode de mesure du défaut de puissance optique d'un vitrage qui détecte le défaut le plus important du vitrage quelle que soit son orientation, qui l'évalue avec une précision supérieure à ± 5 millidioptries, qui réalise la mesure complète du vitrage dans un temps au plus égal à la durée de fabrication du vitrage, en particulier dans le cas des pare-brise et qui, enfin, permette de suivre l'évolution de la qualité des vitrages produits au cours du temps.

Il est connu d'éclairer un objet transparent avec une source de lumière sensiblement ponctuelle et d'observer sur un écran l'image projetée cette technique, connue sous le nom d'"ombroscopie", permet de repérer les défauts de puissance optique de l'objet, en particulier d'un vitrage. En effet, là où se trouve une lentille convergente, les rayons lumineux sont rassemblés et éclairent plus fortement la zone de l'écran concernée tandis qu'au contraire, la zone touchée s'obscurcit, dans le cas d'une lentille divergente.

Une méthode de ce type a été décrite dans le brevet français FR 2 182 254. Elle y est appliquée à l'observation en réflexion d'une feuille de verre produite en ruban continu. Dans ce type de méthode, l'appréciation visuelle ne peut être que qualitative car l'oeil est incapable d'évaluer quantitativement les différences de luminosité. Ainsi, lorsque ces méthodes sont utilisées dans les unités de production de pare-brise, c'est pour effectuer un contrôle qualitatif en cours de production ou en bout de chaîne. Ce contrôle permet en particulier d'éliminer un défaut aléatoire qui peut être créé au cours des étapes de la fabrication d'un pare-brise feuilleté : lorsque deux feuilles de verre plat découpées à la dimension du pare-brise sont assemblées l'une sur l'autre pour être bombées thermiquement, il peut arriver qu'un minuscule éclat de verre se retrouve entre les deux plaques qui verront en conséquence leurs surfaces se déformer pour le contourner. Si ce défaut n'était pas détecté à l'issue du bombage, l'espace entre les deux verres se remplirait du matériau plastique intercalaire lors de l'assemblage et une lentille convergente très localisée serait ainsi créée. L'ombroscopie permet de détecter de tels défauts pendant ou à la fin de la fabrication et d'éliminer le pare-brise concerné.

Une méthode a été proposée pour évaluer quantitativement les éclairements d'une image ombroscopique afin d'en déduire les valeurs de la puissance optique. La demande de brevet européenne EP 0 342 127 propose d'observer l'image ombroscopique d'un ruban de verre obtenue par réflexion lorsqu'on l'éclaire sous incidence rasante avec la lumière diffuse d'une source lumineuse de grande surface. La comparaison des mesures effectuées selon une ligne droite perpendiculaire à l'axe des défauts dominants permet - après traitement numérique du signal obtenu - de mesurer le défaut dans une direction privilégiée.

Le dispositif de l'invention utilise un montage du type de ceux utilisés en ombroscopie et effectue des mesures d'éclairement de l'ombre projetée.

L'invention concerne un procédé de mesure et de contrôle de la qualité optique d'un vitrage dans lequel on l'éclaire avec une source lumineuse localisée et où on enregistre l'image ombroscopique obtenue sur un écran et où l'éclairement relevé en un point (M) de l'écran est pondéré en fonction de l'éclairement qui existe au même point (M) en l'absence de vitrage et en fonction des caractéristiques géométriques et optiques du point correspondant (m) sur le vitrage. Les caractéristiques géométriques du point (m) du vitrage comprennent l'angle d'incidence ($\alpha$) sur un élément de petites dimensions et la distance ($L_1$) source-élément, tandis que les caractéristiques optiques sont l'absorption et la réflexion pondérées par les caractéristiques spectrales de la source et de la caméra. Dans le procédé de l'invention, c'est un ordinateur associé à la caméra qui effectue la pondération.

La méthode de l'invention est particulièrement appropriée lorsque le vitrage est un pare-brise d'automobile. Celui-ci est identifié à l'aide de l'image de son contour grâce à un logiciel de reconnaissance de formes.

Dans le procédé de l'invention, les éléments du calcul sont tels que la grandeur mesurée est la déformation, cette valeur est comparée à des limites différentes selon la zone du pare-brise concernée, la limite entre les zones est mémorisée dans l'ordinateur associé à la caméra.

L'invention est caractérisée par le fait que la source lumineuse localisée est limitée par un diaphragme situé à la sortie de l'objectif d'un projecteur. Par ailleurs, le plan-objet à la sortie du condenseur a son image fournie par l'objectif sur l'écran et le pouvoir de résolution de la méthode dans une direction donnée est égal à la dimension du faisceau au niveau du pare-brise.

L'invention décrit aussi un dispositif qui comporte une caméra matricielle CCD associée à un ordinateur, celui-ci mémorise l'image obtenue sur l'écran en l'absence de vitrage et il évalue les caractéristiques optiques au point (m) du vitrage à partir de l'angle d'incidence ($\alpha$) sur l'élément (21) correspondant, et des valeurs d'absorption (A) et de réflexion (R) sous incidence normale.

L'invention concerne également l'application au contrôle des pare-brise automobiles sur une ligne de production.

La technique de l'invention permet ainsi de mesurer séparément la zone de visibilité d'un pare-brise et sa zone périphérique, cela dans des temps inférieurs à la durée de fabrication du pare-brise. Cette technique permet également d'effectuer la mesure soit dans les conditions de vision du conducteur, soit dans les conditions des tests prévus par les normes de réception des clients producteurs d'automobiles. En suivi de production, la méthode permet de détecter dès son origine, la tendance à la dégradation de la qualité optique.

L'invention sera rendue compréhensible grâce à la description et aux figures qui suivent.

Parmi ces dernières :

la **figure 1** présente schématiquement le principe de la méthode,

la **figure 2** illustre son pouvoir de résolution,

la **figure 3** représente les zones différentes du pare-brise,

sur la **figure 4** on illustre l'une des corrections à appliquer dans le calcul de la puissance optique et,

sur la **figure 5**, c'est le schéma complet des opérations du calcul à effectuer qui est représenté.

L'invention utilise comme on l'a vu, la technique ombroscopique habituelle qui consiste à éclairer un vitrage avec un projecteur et à en observer l'ombre sur un écran.

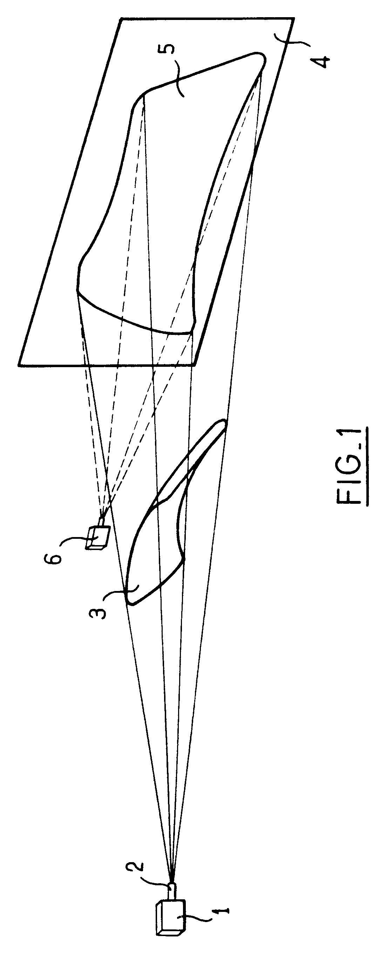

Sur la **figure 1**, on voit en 1 le projecteur qui, grâce à un diaphragme non représenté sur la figure, joue le rôle de source ponctuelle 2. La lumière issue de 2 éclaire le vitrage - sur la figure un pare-brise - 3 placé à une distance importante (par exemple 4 mètres) de la source lumineuse 2. Le vitrage 3 est placé dans les conditions où on veut détecter l'effet produit par le défaut de puissance optique. On sait en effet que pour une structure géométrique donnée du défaut du verre, l'action du défaut sur la vision, c'est-à-dire l'effet optique du défaut structurel du vitrage, dépend fortement des conditions d'observation telles que : distances relatives de l'observateur, du vitrage et de l'objet mais surtout, angle d'incidence.

Dans le cas des pare-brise, pour avoir une idée du confort visuel du conducteur, c'est dans les conditions réelles qu'il faut faire l'observation. C'est pourquoi, en général, dans le dispositif d'observation ombroscopique, le pare-brise est incliné comme sur la voiture et l'axe optique du projecteur est horizontal et parallèle à l'axe du véhicule.

En avant du pare-brise à une distance qui est par exemple de 4 mètres, se trouve un écran vertical 4 sur lequel est projetée l'image ombroscopique 5 du pare-brise 3.

Sur la figure 1 toujours, on voit une caméra vidéo 6 qui permet d'observer toute l'ombre du pare-brise. Il s'agit d'une caméra matricielle CCD, par exemple le modèle 4712 de la Société COHU Inc. (San Diego, CA, USA). Celle-ci qui peut travailler à des éclairement bas de 0,2 lux a 699 lignes horizontales pour 580 lignes verticales. Dans les conditions habituelles, une surface de 2 x 2 mm sur l'écran fournit un point de mesure.

L'emplacement de la caméra n'est pas déterminant en lui-même, il suffit qu'il permette d'obtenir une vision non déformée de tout le pare-brise. On placera par exemple avantageusement la caméra juste au-dessus du pare-brise, à la verticale de l'axe optique du projecteur comme on l'a représentée sur la figure 1.

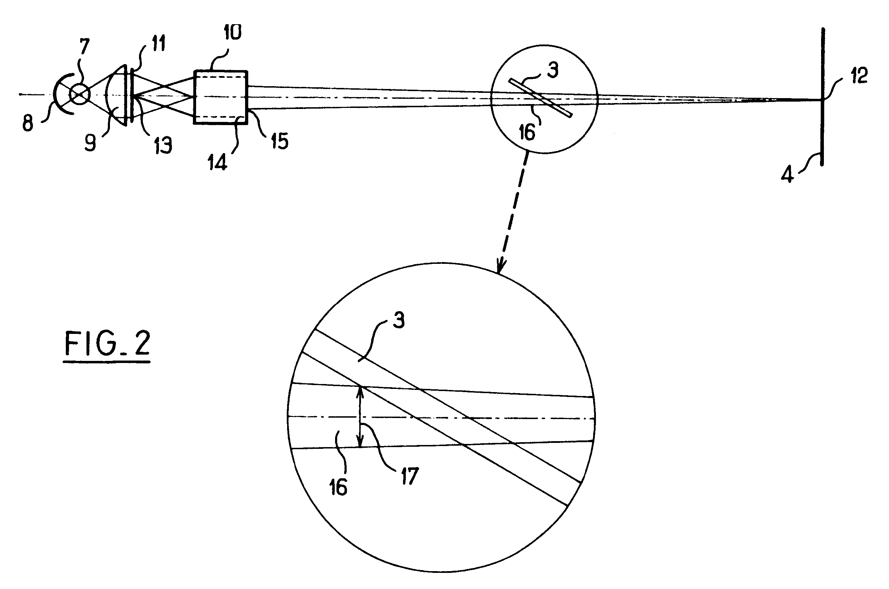

La figure 2 présente une vue schématique du projecteur 1. On voit en 7 la lampe à filament de tungstène, elle est en silice à atmosphère d'halogène. A l'arrière un miroir sphérique 8 récupère l'onde arrière. Le condenseur 9 donne une image du filament à l'entrée de l'objectif 10. L'emplacement habituel de la diapositive est représenté en 11. L'objectif est réglé de manière à donner sur l'écran 4 l'image du plan-objet 11, c'est-à-dire qu'on obtient au point 12 une image nette du point 13 sur l'axe de la diapositive. Mais le faisceau émis par le projecteur à la sortie de son objectif 10 est diaphragmé. Son diamètre d'origine représenté en 14 est réduit en 15 par un diaphragme non représenté. La tache lumineuse en 15 doit remplir deux conditions, l'une concerne son éclairement et l'autre, sa forme et ses dimensions. Les réglages du projecteur doivent tout d'abord garantir un éclairement parfaitement homogène du faisceau en 15. Par ailleurs, le diaphragme doit avoir des dimensions telles qu'au niveau du verre, le faisceau lumineux qui forme l'image d'un point ait dans une direction donnée, une largeur qui soit égale au pouvoir de résolution qu'on désire donner à la méthode dans cette direction. Sur la figure 2, on voit en 16 le faisceau au niveau du vitrage 3 et dans la partie agrandie, on voit également en 17 la dimension verticale d de ce faisceau à la traversée du verre. La grandeur d est le pouvoir de résolution de la méthode dans la direction verticale.

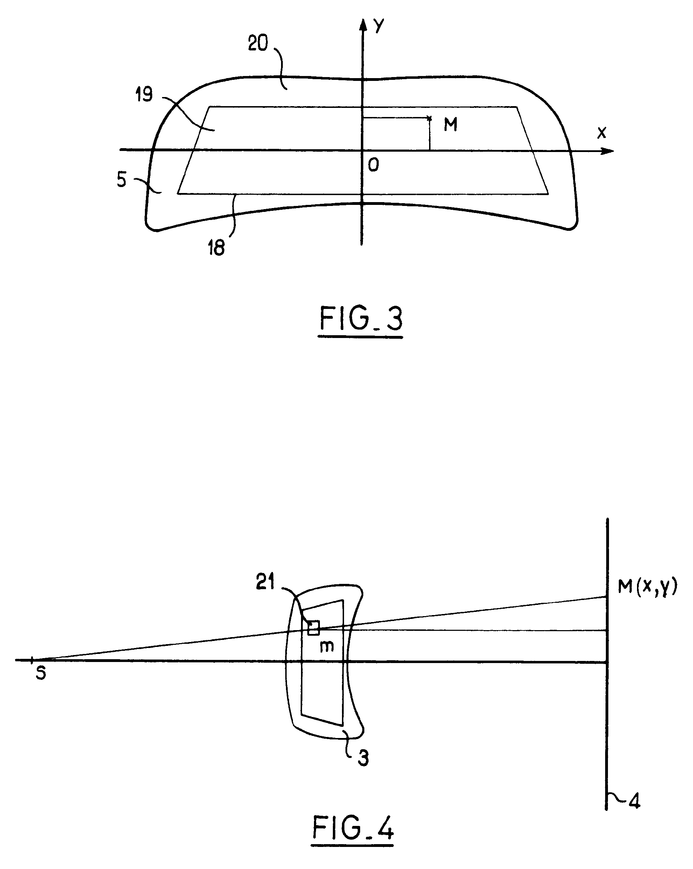

Sur la figure 3 on a représenté l'ombre 5 du pare-brise 3 sur l'écran 4. On voit en 18 un cadre qui délimite deux zones dans le pare-brise, une zone 19 de vision principale et une zone périphérique 20.

Selon les cas, cette séparation en zones résulte d'une norme (R 43 de la ECE par exemple) ou des prescriptions du constructeur. Toujours est-il que les limites des valeurs des défauts optiques à respecter dans chaque zone ne sont pas les mêmes. Lors d'une mesure, la séparation 18 entre les deux zones n'est pas visible sur l'écran : elle est enregistrée dans la mémoire d'un ordinateur associé à la caméra vidéo 6. De même, on a prévu d'utiliser le même procédé pour délimiter la zone dans laquelle on n'effectue aucune mesure à la périphérie du pare-brise. Chaque type de pare-brise qui doit être observé par la caméra 6 est identifié lors de son passage soit grâce à une information transmise manuellement par l'opérateur, soit parce que la forme du contour 5 sur l'écran est "reconnue" par l'ensemble caméra-ordinateur avant toute nouvelle mesure. Il est même possible que cette reconnaissance se produise alors que la caméra n'a encore jamais "vu" l'ombre projetée 5. En effet dans l'industrie moderne les directives fournies par un constructeur automobile à un fabricant de pare-brise se font le plus souvent, dans le cadre de la conception assistée par ordinateur (CAO) sur un support informatique. A partir des informations fournies qui comportent en général les indications permettant de délimiter les deux zones 19 et 20 on fait calculer à l'ordinateur la position qu'aura sur l'écran le pourtour de l'image ombroscopique du pare-brise et celle qu'aurait eu le cadre 18 s'il avait été matérialisé sur le pare-brise 3. Ce faisant on rend possible d'une part l'identification ultérieure du type de pare-brise qui se présente dans la cabine d'essai et d'autre part le positionnement d'un point de l'image ombroscopique par rapport aux zones 19 et 20.

Sur la figure 3 on a également représenté un système d'axes (ox, oy) qui permettent à la caméra assistée de l'ordinateur d'associer à chaque point M de l'image ombroscopique un couple de coordonnées (x, y). Cette information sur les coordonnées est importante car elle permettra, dans la suite des opérations, lorsqu'un défaut aura été détecté au point M de le comparer aux valeurs limites fixées pour chacune des zones 19 et 20 et même de connaître précisément sa position pour procéder éventuellement à un marquage exact ou pour étudier soigneusement l'origine d'un défaut systématique.

4

Le principe de la numérisation de l'image ombroscopique consiste à effectuer le calcul suivant :

$$D_x + D_y = g(x, y)\left[\frac{E}{E_{x,y}} - 1\right] P_m$$

$D_x$ est la déformation dans la direction Ox liée linéairement à la composante de la puissance optique dans cette même direction) $D_y$, la déformation dans la direction Oy.

$E_{x,y}$ est l'éclairement de l'écran au point M de coordonnées x et y.

E est l'éclairement qu'on aurait en M si le verre était sans défauts optiques mais avec des phénomènes d'atténuations dues à la réflexion et à la transmission lumineuses locales qui seraient les mêmes.

g(x,y) est un terme géométrique.

$P_m$ est une longueur correspondant au pas d'une mire projetée sur l'écran dans les méthodes d'évaluation manuelles.

Sur la figure 4, on voit en effet que selon l'emplacement dans le pare-brise du point m dont la projection est le point M (x,y), les conditions géométriques telles que distance Sm entre la source et le pare-brise, ou distance pare-brise écran sont différentes. Le terme g (x,y) rend compte de ce grandissement qui est différent pour chaque élément 21 du pare-brise. Comme ce terme varie peu, il n'est pas nécessaire d'encombrer la mémoire de l'ordinateur de valeurs pour chaque point, un calcul pour chaque petit élément de, par exemple, 10 x 10 cm suffit dans le cas d'un pare-brise de forme simple. L'expression qui permet de calculer g (x,y) est :

$$g(x,y) = \frac{L}{L_1 + \sqrt{x^2 + y^2} \cdot tg\alpha}$$

où L est la distance source-écran, $L_1$ la distance entre la source 2 et l'élément 21 et α, l'angle d'inclinaison du petit élément 21 dans lequel se trouve le point M concerné ou plus précisément, l'angle entre le plan tangent à cet élément et un plan perpendiculaire à l'axe du projecteur.

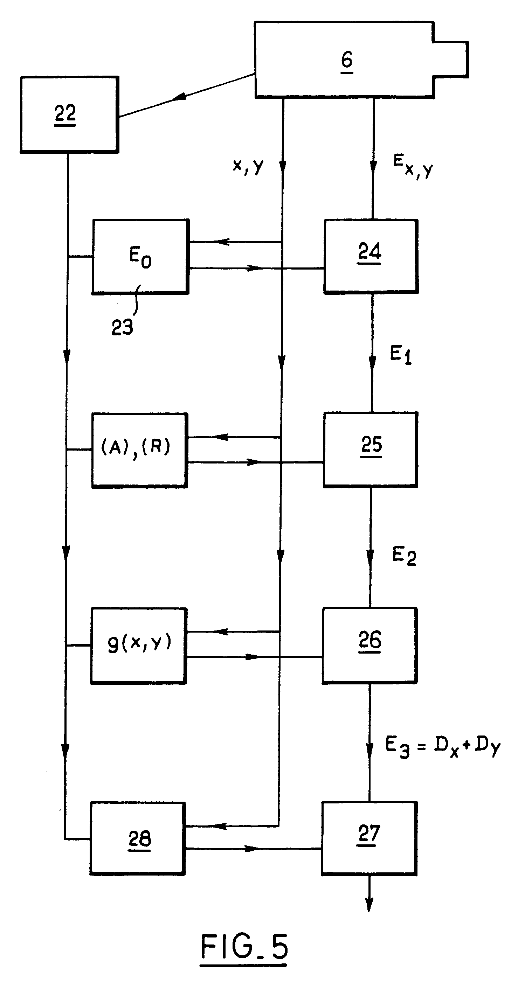

Sur la figure 5, on a représenté une vue synoptique des opérations successives à effectuer par l'ordinateur qui est associé à la caméra 6.

Avant de débuter une campagne de mesures, il convient tout d'abord d'alimenter la mémoire de l'ordinateur avec toutes les informations nécessaires pour effectuer le travail.

Sur le schéma de la figure 5, cette mémoire est symbolisée par la case 22. C'est là que sont stockées toutes les informations sur le pare-brise lui-même : le contour de son ombre projetée sur l'écran, qui permettra le moment venu, à partir des informations fournies par la caméra 6 à l'ordinateur, en utilisant un logiciel de reconnaissance de forme, d'identifier le pare-brise et d'accéder aux fichiers où sont emmagasinées les informations utiles pour les calculs comme le domaine des valeurs de x et de y qui correspondent à chacune des zones 19 ou 20 ou les valeurs des paramètres spécifiques pour chaque petit élément 21. Ces dernières comprennent l'angle α, la valeur réelle sous l'incidence correspondante de la transmission lumineuse du vitrage, T - éventuellement teinté - ainsi que de sa réflexion lumineuse R et enfin la distance $L_1$ entre la source lumineuse 2 et l'élément 21 et la distance $L_2$ entre le point m et l'écran 4.

On introduit également dans la mémoire 22 les limites supérieures tolérées pour le défaut $D_x + D_y$ respectivement dans la zone 19 et dans la zone 20.

La séquence des opérations de la mesure de la puissance optique d'un pare-brise est la suivante : avant l'arrivée du pare-brise, la caméra 6 enregistre les éclairements de chaque point M (x,y) de son champ de vision. En effet, l'éclairement $E_{x,y}$ donné par un projecteur comme 1 n'est pas le même en tout point et l'éclairement $E_o$ (x, y) en chaque point M servira de référence pour la suite des opérations. Cette information est stockée dans la mémoire 23. A l'arrivée du pare-brise dans le champ, on procède à la prise de vue de l'image ombroscopique. Celle-ci s'effectue concrètement en $1/25^e$ de seconde et pendant ce temps le pare-brise n'a pas besoin d'être immobile. Il peut parcourir 5 ou même 10 mm. La première opération est son identification, soit automatiquement comme on l'a vu plus haut, soit par l'intervention d'un opérateur. Les deux techniques peuvent d'ailleurs être utilisées à la fois, l'identification du pare-brise grâce à sa forme se faisant automatiquement et la nature (épaisseur, couleur) du vitrage étant par exemple introduite manuellement.

La première opération de mesure proprement dite s'effectue dans la cellule 24, elle consiste à comparer l'éclairement $E_M$ mesuré par la caméra au point M de coordonnées x et y à la mesure $E_o$ effectuée au même point en l'absence de pare-brise :

$$E_1 = \frac{E_M - E_o}{E_o}$$

La deuxième opération qui s'effectue dans la cellule 25 consiste à corriger la valeur $E_1$ de toutes les variations d'intensité lumineuses qui ont une autre origine que le défaut de puissance optique qu'il s'agit de mesurer. Ce sont - en dehors des salissures qui sont aléatoires - les variations lumineuses dues aux modifications par absorption et par réflexion à la traversée du verre. Elles ont été déterminées une fois pour toutes sous incidence normale à partir des courbes A ($\lambda$) et R ($\lambda$) qui caractérisent l'absorption et la réflexion spectrales du verre et S ($\lambda$) qui est la caractéristique spectrale de la source lumineuse ainsi que C ($\lambda$) qui est celle de la caméra. Ces éléments (A et R sous incidence normale) subissent des variations, fonction de l'angle $\alpha$. Pour chaque élément 21 on effectuera donc le calcul suivant :

$$E_2 \;=\; \frac{E_1}{1 - A\,(\alpha) \;-\; R\,(\alpha)}$$

Dans la cellule 26 on calcule la correction de distance g (x,y) déjà évoquée :

$$E_3 \;=\; g\,(x,y)\,E_2\,P_m$$

C'est cette valeur $E_3 = D_x + D_y$ qui est la résultante des grandissements en x et en y provoqués par le défaut de puissance optique situé au point M du pare-brise.

La dernière opération consiste à comparer cette valeur aux limites qu'on a fixées en production. Elle est réalisée dans la cellule 27 à partir des limites stockées dans l'élément de mémoire 28 en fonction de la zone 19 ou 20 concernée. L'ultime opération se termine par l'affichage du résultat, il peut se faire de diverses manières, l'une d'elles consiste à faire figurer les résultats sur une image vidéo représentant le pare-brise avec le cadre 18 matérialisé. Dans chacune des deux zones 19 et 20, chaque point de l'image est d'une couleur différente selon que la puissance optique en ce point est inférieure ou supérieure à la limite opposée. Une autre manière d'exploiter les résultats sur une ligne de production consiste à fournir une réponse du type "stop or go" : le bon pare-brise, celui qui dans chacune de ses deux zones 19 et 20 a une puissance optique inférieure à la limite correspondante suit son circuit d'exploitation normale à la sortie de la cabine de contrôle. L'autre suit un circuit dérivé et reçoit à la sortie de la cabine une étiquette auto-collante sur laquelle une imprimante a inscrit la valeur et la localisation du défaut à l'origine du rebut.

Une des spécificités de la méthode et du dispositif qui viennent d'être décrits réside dans la possibilité d'adapter leur pouvoir de résolution aux normes ou aux procédés de contrôle existants qu'il s'agit de respecter pour les unes ou auxquels on veut se substituer avec les mêmes critères de sélection pour les autres.

Les méthodes existantes qui évaluent l'image ombroscopique d'un vitrage connu comme par exemple celle qui est décrite dans la demande de brevet européenne EP 0 342 127 utilisent des systèmes de balayage dans une direction à une vitesse déterminée et analysent le signal en effectuant un filtrage en fréquence de manière à éliminer les défauts dont la largeur est inférieure à une certaine valeur.

Les méthodes normalisées ou employées dans l'industrie automobile utilisent des techniques de projection de mires constituées de raies zébrées au travers du pare-brise ont des pouvoirs de résolution - pour la composante du défaut perpendiculaire aux raies - qui est l'épaisseur de la raie au niveau du pare-brise.

Lorsque la méthode de l'invention est utilisée dans le but d'obtenir l'information la plus complète sur la qualité optique du pare-brise, on utilise un diaphragme en 15 (figure 2) qui fournit au niveau du pare-brise un faisceau 16 de section circulaire. Son diamètre 17 est choisi égal à la largeur minimum du défaut à détecter. Tout défaut de largeur inférieure n'agira pas de manière sensible sur l'éclairement de l'écran.

Dans le cas où l'on veut obtenir des résultats de mesure conformes à ceux obtenus dans les conditions normalisées d'un procédé utilisant une mire zébrée particulière, il suffit de se mettre dans les conditions de projection de la norme et d'avoir pour le faisceau 16 dans le plan du verre, dans une direction perpendiculaire à celle des rayures de la mire la même dimension 17 que celle, à ce niveau, des raies projetées dans les mêmes conditions. Si l'autre dimension est sensiblement supérieure ou si la section est circulaire mais que les défauts du pare-brise ont une direction priviliégée et agissent justement perpendiculairement aux raies de la mire, alors le défaut détecté est celui qu'aurait détecté la méthode normalisée manuelle.

Le deuxième cas évoqué ci-dessus : direction d'action privilégiée des défauts perpendiculaires aux raies de la mire est la règle pour les systèmes de contrôle-réception de l'industrie automobile lorsqu'il existe des défauts systématiques - comme ceux dus à la forme du pare-brise - ce sont ceux-là que la méthode de contrôle manuelle cherche à mesurer. Le procédé de l'invention les détectera donc automatiquement. Dans le cas où les défauts ont une direction aléatoire, cependant, la méthode de l'invention ne peut être que plus rigoureuse que les méthodes manuelles : elle ne laissera jamais passer un défaut qui aurait été arrêté par celle-ci. Cette dernière remarque s'applique également pour d'éventuelles traces de salissure qui auraient pu apparaître sur le pare-brise au cours des phases de sa fabrication. Il n'est pas exclu qu'un tel défaut de propreté soit interprété par la méthode de l'invention comme un défaut de puissance optique négative (lentille divergente). Mais d'une part, cette erreur rarissime serait immédiatement détectée par l'examen visuel systématique qui suit le rebut du pare-brise et dans tous les cas, le contrôle de la méthode de l'invention ne peut être que plus rigoureux que les contrôles existants.

6

Le dispositif et la méthode proposés par l'invention permettent ainsi un contrôle automatique à 100 % de toute la production d'une ligne de fabrication de pare-brise. Ils permettent de fixer des limites différentes pour des zones différentes dans chaque type de pare-brise. Ils mesurent le défaut de puissance optique quelle que soit sa direction d'action. Ils bénéficient du pouvoir de résolution qu'on souhaite. Ils sélectionnent enfin une qualité optique avec des critères au moins aussi rigoureux que ceux des méthodes utilisées sur les lignes de fabrication d'automobiles.

**Revendications**

1. Procédé de mesure et de contrôle de la qualité optique d'un vitrage (3) dans lequel on l'éclaire avec une source lumineuse localisée (2, 15) et où on enregistre l'image ombroscopique obtenue sur un écran (4), caractérisé en ce que l'éclairement relevé en un point (M) de l'écran est pondéré en fonction de l'éclairement qui existe au même point (M) en l'absence de vitrage et en fonction des caractéristiques géométriques et optiques du point correspondant (m) sur le vitrage (3).

2. Procédé selon la revendication 1, caractérisé en ce que les caractéristiques géométriques du point (m) du vitrage comprennent l'angle d'incidence ($\alpha$) sur un élément (21) de petites dimensions et la distance ($L_1$) source (2, 15)-élément 21).

3. Procédé selon la revendication 1, caractérisé en ce que les caractéristiques optiques du point (m) du vitrage sont l'absorption et la réflexion pondérées par les caractéristiques spectrales de la source (2, 15) et de la caméra (6).

4. Procédé selon l'une de revendications précédentes, caractérisé en ce que c'est un ordinateur associé à la caméra (6) qui effectue la pondération.

5. Procédé selon la revendication 1, caractérisé en ce que le vitrage est un pare-brise d'automobile.

6. Procédé selon la revendication 4 et la revendication 5, caractérisé en ce que le pare-brise (3) est identifié à l'aide de l'image 5) de son contour grâce à un logiciel de reconnaissance de formes.

7. Procédé selon l'une des revendications précédentes, caractérisé en ce que les éléments du calcul sont tels que la grandeur mesurée ($E_3$) est la déformation.

8. Procédé selon la revendication 5 et la revendication 7, caractérisé en ce que la valeur mesurée ($E_3$) est comparée à des limites différentes selon la zone (19, 20) du pare-brise (3) concerné.

9. Procédé selon la revendication 8, caractérisé en ce que la limite (18) entre les zones (19, 20) est mémorisée dans l'ordinateur associé à la caméra (6).

10. Procédé selon l'une des revendications précédentes, caractérisé en ce que la source lumineuse localisée (15) est imitée par un diaphragme situé à la sortie de l'objectif (10) d'un projecteur (1).

11. Procédé selon la revendication 10, caractérisé en ce que le plan-objet (11) à la sortie du condenseur (9) a son image fournie par l'objectif (10) sur l'écran (4).

12. Procédé selon la revendication 11, caractérisé en ce que le pouvoir de résolution de la méthode dans une direction donnée est égal à la dimension (17) du faisceau (16) au niveau du vitrage (3).

13. Dispositif pour réaliser le procédé selon la revendication 1, caractérisé en ce qu'il comporte une source lumineuse localisée (2, 15) pour éclairer le vitrage et ainsi former sur un écran (4) une image ombroscopique du vitrage, une caméra vidéo CCD (6) qui permet d'observer toute l'ombre du pare-brise, cette caméra étant associée à un ordinateur, celui-ci ayant mémorisé l'image obtenue sur l'écran en l'absence du vitrage dans le but de pondérer l'éclairement relevé en un point (M) de cet écran en fonction de l'éclairement qui existe au même point (M) en l'absence du vitrage et en fonction de caractéristiques géométriques et optiques du point correspondant (m) sur le vitrage.

14. Dispositif selon la revendication 13, caractérisé en ce que l'ordinateur mémorise l'image obtenue sur l'écran en l'absence de vitrage.

**15.** Dispositif selon la revendication 13 ou 14, caractérisé en ce que l'ordinateur évalue les caractéristiques optiques au point (m) du vitrage à partir de l'angle d'incidence ($\alpha$) sur l'élément (21) correspondant et des valeurs d'absorption (A) et de réflexion (R) sous incidence normale.

**16.** Application du procédé et du dispositif selon l'une quelconque des revendications précédentes au contrôle des pare-brise automobiles sur une ligne de production.

**Patentansprüche**

**1.** Verfahren zum Messen und zur Kontrolle der optischen Qualität einer Glasscheibe (3), in welchem sie mit einer örtlich begrenzten Lichtquelle (2, 15) angestrahlt und das auf einen Bildschirm (4) projizierte Schattenbild aufgezeichnet wird, **dadurch gekennzeichnet, daß** die in einem Punkt (M) des Bildschirms gemessene Beleuchtungsstärke in Abhängigkeit von der Beleuchtungsstärke, die in demselben Punkt (M) ohne die Glasscheibe vorhanden ist, und in Abhängigkeit von den geometrischen und optischen Parametern des entsprechenden Punktes (m) auf der Glasscheibe (3) gewichtet wird.

**2.** Verfahren nach Anspruch 1, **dadurch gekennzeichnet, daß** die geometrischen Parameter des Punktes (m) der Glasscheibe den Einfallswinkel ($\alpha$) auf einem Element (21) mit kleinen Abmessungen und den Abstand ($L_1$) zwischen Lichtquelle (2, 15) und Element (21) umfassen.

**3.** Verfahren nach Anspruch 1, **dadurch gekennzeichnet, daß** die optischen Parameter des Punktes (m) der Glasscheibe die nach den Spektralkennwerten der Lichtquelle (2, 15) und der Kamera (6) gewichteten Absorptions- und Reflexionsgrade sind.

**4.** Verfahren nach einem der vorhergehenden Ansprüche, **dadurch gekennzeichnet, daß** die Wichtung von einem mit der Kamera (6) verbundenen Rechner durchgeführt wird.

**5.** Verfahren nach Anspruch 1, **dadurch gekennzeichnet, daß** die Glasscheibe eine Windschutzscheibe für Kraftfahrzeuge ist.

**6.** Verfahren nach Anspruch 4 und 5, **dadurch gekennzeichnet, daß** die Windschutzscheibe (3) mittels der Abbildung (5) ihres Umfangs durch ein Formerkennungsprogramm identifiziert wird.

**7.** Verfahren nach einem der vorhergehenden Ansprüche, **dadurch gekennzeichnet, daß** die Berechnungselemente derart sind, daß die Meßgröße (E3) die Verzerrung ist.

**8.** Verfahren nach Anspruch 5 und 7, **dadurch gekennzeichnet, daß** der Meßwert von ($E_3$) mit den entsprechend den Bereichen (19, 20) der betreffenden Windschutzscheibe (3) verschiedenen Grenzwerten verglichen wird.

**9.** Verfahren nach Anspruch 8, **dadurch gekennzeichnet, daß** die Grenze (18) zwischen den Bereichen (19, 20) in dem mit der Kamera (6) verbundenen Rechner gespeichert ist.

**10.** Verfahren nach einem der vorhergehenden Ansprüche, **dadurch gekennzeichnet, daß** die örtlich begrenzte Lichtquelle (15) von einer Blende begrenzt ist, die sich am Ausgang des Objektivs (10) eines Projektors (1) befindet.

**11.** Verfahren nach Anspruch 10, **dadurch gekennzeichnet, daß** die Abbildung der Objektebene (11) am Ausgang des Kondensors (9) vom Objektiv (10) auf den Bildschirm (4) projiziert wird.

**12.** Verfahren nach Anspruch 11, **dadurch gekennzeichnet, daß** das Auflösungsvermögen des Verfahrens in einer gegebenen Richtung gleich der Ausdehnung (17) des Strahlenbündels (16) in der Ebene der Glasscheibe (3) ist.

**13.** Vorrichtung zur Durchführung des Verfahrens nach Anspruch 1, **dadurch gekennzeichnet, daß** sie eine örtlich begrenzte Lichtquelle (2, 15) zum Anstrahlen einer Glasscheibe, wodurch ein Schattenbild der Glasscheibe auf einen Bildschirm (4) projiziert wird, und eine Videokamera CCD (6) umfaßt, welche die Erfassung des gesamten Schattenbildes einer Windschutzscheibe ermöglicht, wobei diese Kamera mit einem Rechner verbunden ist, in welchem das auf dem Bildschirm ohne die Glasscheibe erhaltene Bild zu dem Zweck gespeichert ist, die in einem Punkt (M) dieses Bildschirms gemessene Beleuchtungsstärke in Abhängigkeit von der Beleuchtungsstärke, die in demselben Punkt (M) ohne die Glasscheibe vorhanden ist, und in Abhängigkeit von den geometrischen und optischen Parametern des entsprechenden Punktes (m) auf der Glasscheibe (3) zu gewichten.

14. Vorrichtung nach Anspruch 13, **dadurch gekennzeichnet, daß** das ohne die Glasscheibe auf den Bildschirm projizierte Bild vom Rechner gespeichert wird.

15. Vorrichtung nach Anspruch 13 oder 14, **dadurch gekennzeichnet, daß** der Rechner die optischen Parameter im Punkt (m) der Glasscheibe ausgehend von dem Einfallswinkel ($\alpha$) auf dem entsprechenden Element (21) und den Absorptions- (A) und Reflexionsgraden (R) bei senkrechtem Einfall bewertet.

16. Anwendung des Verfahrens und der Vorrichtung nach einem der vorhergehenden Ansprüche zur Kontrolle der Windschutzscheiben für Kraftfahrzeuge in einer Produktionslinie.

## Claims

1. A process for measuring and checking the optical quality of a window (3) in which illumination is provided by a localized luminous source (2, 15) and in which there is registered the shadow image obtained on a screen (4), characterized in that the illumination recorded at a point (M) (of the screen) is weighted as a function of the illumination which exists at the same point (M) in the absence of a window and as a function of the geometrical and optical characteristics of the corresponding point (m) on window (3).

2. A process according to claim 1, characterized in that the geometrical characteristics of point (m) of the window comprise angle of incidence ($\alpha$) of a component (21) of small dimensions and distance ($L_1$) from the source (2, 15) to component (21).

3. A process according to claim 1, characterized in that the optical characteristics of point (m) of the window are the absorption and reflection weighted by the spectral characteristics of the source (2, 15) and camera (6).

4. A process according to any one of the previous claims, characterized in that weighting is performed by a computer associated with camera (6).

5. A process according to claim 1, characterized in that the window is a car windscreen.

6. A process according to claim 4 and claim 5, characterized in that windscreen (3) is identified with the aid of image (5) of its contour by means of form recognition software.

7. A process according to any one of the previous claims, characterized in that the computation data is such that the measured magnitude ($E_3$) is the deformation.

8. A process according to claim 5 and claim 7, characterized in that the measured value ($E_3$) is compared with different limit values according to the zone (19, 20) of the windscreen (3) concerned.

9. A process according to claim 8, characterized in that the limit (18) between the zones (19, 20) is memorized in the computer associated with camera (6).

10. A process according to any one of the previous claims, characterized in that localized luminous source (15) is limited by the diaphragm situated outside lens (10) of a projector (1).

11. A process according to claim 10, characterized in that object plane (11) outside condenser (9) has its image supplied by lens (10) on screen (4).

12. A process according to claim 11, characterized in that the resolving power of the method in a given direction is equal to dimension (17) of beam (16) at window (3).

13. A device for the implementation of the process according to claim 1, characterized in that it comprises a localized luminous source (2, 15) to illuminate the window and thereby form on a screen (4) a shadow image of the window, a video camera CCD (6) which makes it possible to observe the entire shadow of the windscreen, such camera being associated with a computer, the latter having memorized the image obtained on the screen in the absence of the window for the purpose of weighting the illumination recorded at a point (M) of such screen as a function of the illumination which exists at the same point (M) in the absence of the window and as a function of the geometrical and optical characteristics of the corresponding point (m) on the window.

14. A device according to claim 13, characterized in that the computer memorizes the image obtained on the screen in the absence of a window.

15. A device according to claim 13 or 14, characterized in that the computer evaluates the optical characteristics at point (m) of the window from angle of incidence ($\alpha$) on the corresponding component (21) and the values of absorption (A) and reflection (R) with normal incidence.

16. Implementation of the process and of the device according to any one of the previous claims for the checking of car windscreens on a production line.

FIG_1

FIG_2

FIG_3

FIG_4

FIG. 5

14